# EUROPÄISCHE PATENTSCHRIFT

(11) **EP 2 624 470 B1**
(45) Veröffentlichungstag und Bekanntmachung des Hinweises auf die Patenterteilung: **05.04.2017**
(21) Anmeldenummer: 12405016.2
(22) Anmeldetag: 02.02.2012
(51) Int. Cl.: H04B 5/00, H04B 7/145

(54) **Elektronisches System als passiver RFID Nahfeld Transformer**
Electronic system as passive RFID near field transformer
Système électronique en tant que transformateur RFID passif de champ proche

(43) Veröffentlichungstag der Anmeldung: 07.08.2013
(73) Patentinhaber: Avance Pay AG, 3123 Belp (CH)
(72) Erfinder: Bircher-Nagy, Heinz, 3123 Belp (CH); Danz, Peter, 3007 Bern (CH); Kronegger, Peter, 8010 Graz (AT)
(74) Vertreter: Bergmeier, Werner

(56) Entgegenhaltungen:
- WO-A1-2007/033706
- WO-A1-2008/119422
- DE-A1- 19 703 029
- US-A1- 2007 182 650
- US-A1- 2007 262 868
- US-A1- 2009 284 082

## Beschreibung

### Gebiet der Erfindung

Die Erfindung betrifft ein passives elektronisches System zur Umleitung und Anpassung von nahfeldbasierten RFID Magnetfeldern, beispielsweise um bei einem NFC Mobiltelefon den RFID- und NFC-Kommunikationsbereich von der Rückseite des Mobiltelefons auf die Vorderseite oder auf einen oder mehrere andere Orte umzulenken, oder auch um die Reichweite zu erhöhen, oder auch um die Kommunikation zwischen zwei unterschiedlichen Antennen zu ermöglichen oder zu verbessern. RFID steht für Radiofrequenz-Identifikation. Mit dieser Technik werden Daten berührungslos zwischen einem RFID Sende- und Empfangsgerät und weiteren RFID Sende- und Empfangsgeräten, respektive RFID-Transpondern übertragen. Bei nahfeldbasierter RFID findet diese berührungslose Übertragung mittels induktiver Kopplung statt.

NFC steht für Near Field Communication, eine Form von nahfeldbasiertem RFID mit einer Trägerfrequenz von 13.56 MHz und einer Kommunikationsdistanz von wenigen Zentimeter. RFID-Transponder gibt es in sehr unterschiedlichen Formen, beispielsweise als Chipkarte, Schlüsselanhänger, Armbanduhr oder Aufkleber.

### Hintergrund der Erfindung

Bekannt sind Systeme, wo die nahfeldbasierte RFID Sende- und Empfangseinheit fest in ein Gerät integriert ist, wie beispielsweise ein Mobiltelefon mit fest integriertem NFC, oder Systeme wie US2011238518 A1, wo die nahfeldbasierte RFID Sende- und Empfangseinheit in Form einer Speicherkarte in den entsprechenden Slot beim Gerät gesteckt wird. Aufgrund der Eigenschaften von nahfeldbasiertem RFID und dem Aufbau des Gerätes ist der Kommunikationsbereich der nahfeldbasierten RFID Sende- und Empfangseinheit stark eingeschränkt. Zudem kann die nahfeldbasierte RFID Sende- und Empfangseinheit nicht an die Eigenschaften des RFID-Transponders angepasst werden. Demzufolge sind die Anwendungsmöglichkeiten eines solchen Gerätes mit integrierter nahfeldbasierter RFID Sende- und Empfangseinheit stark limitiert.

Bekannt sind Systeme, wo eine externe, nahfeldbasierte RFID Sende- und Empfangseinheit an ein Gerät angeschlossen wird. Durch die Möglichkeiten der freien Positionierung der separaten RFID Sende- und Empfangseinheit kann auf die Bedürfnisse der jeweiligen Anwendungsmöglichkeiten besser eingegangen werden. Jedoch bedingt dieser Lösungsansatz, dass das Gerät über eine entsprechende Kommunikationsmöglichkeit zur RFID Sende- und Empfangseinheit verfügt und eine separate RFID Sende- und Empfangseinheit verwendet wird. Dies erschwert den Einsatz von Standardgeräten und erhöht durch die separate RFID Sende- und Empfangseinheit die Systemkosten. Zur weiteren Verbesserung des Kommunikationsbereiches müsste zudem die separate RFID Sende- und Empfangseinheit an die Kommunikationseigenschaften der RFID-Transponder angepasst werden. In der Praxis würde dies pro Anwendungsfall eine speziell abgestimmte, nahfeldbasierte RFID Sende- und Empfangseinheit bedingen, was die Systemkosten weiter erhöhen würde.

Bekannt sind Systeme, wie SG112842 A1 oder JP2011119842 A wo durch speziell geformte Wicklungen oder Ferrite die induktive Kopplung, und dadurch der Kommunikationsbereich zwischen der nahfeldbasierten RFID Sende- und Empfangseinheit und den RFID-Transpondern verbessert wird. Diese Lösungen haben jedoch eine örtlich stark begrenzte Wirkung und sind nur im Bereich der Antenne anwendbar.

Weiter sind Systeme bekannt, wo das Gerät mit der RFID Sende- und Empfangseinheit über einen Antennenausgang verfügt und das Nahfeld an der gewünschten Stelle über eine externe Antenne abgestrahlt wird. Solche Systeme haben zum Nachteil, dass spezielle Vorkehrungen beim Gerät mit der nahfeldbasierten RFID Sende- und Empfangseinheit notwendig sind und eine spezielle, auf die nahfeldbasierte RFID Sende- und Empfangseinheit abgestimmte Antenne verwendet werden muss. Dies erhöht die Systemkosten und bedingt den Einsatz proprietärer Geräte.

Bekannt sind weiter System, wie JP2001024547 A, wo durch den Einsatz aktiver Elektronik das RFID Feld dem Anwendungszeck angepasst wird. Dieser Lösungsansatz erlaubt eine sehr freie Positionierung des RFID Feldes, bedingt jedoch eine entsprechende Energieversorgung der aktiven Elektronik.

Aus der WO 2007/033706 A1 ist ein mehrteiliges medizintechnisches System mit einem Überbrückungselement bekannt. Das Überbrückungselement sorgt für eine induktive Kopplung zwischen einer Leseeinheit in einer Basiseinheit und einem Transponder in einer komplementären Komponente. Nachteilig ist hierbei, dass das Überbrückungselement, die Leseeinheit und die komplementäre Komponente baulich, zum Beispiel mit einem Clic-Adapter, genau aufeinander abstimmt sein müssen. Die Kopplung einer Vielzahl unterschiedlicher Elemente, beispielsweise vieler verschieden gestalteter Mobiltelefone unterschiedlicher Hersteller, ist dabei nicht vorgesehen.

In der DE 197 03 029 A1 ist ein Übertragungsmodul offenbart, das eine Koppelspule und eine Antennenspule aufweist. Die Koppelspule und die Antennenspule sind hinsichtlich mindestens eines ihrer die Spulenimpedanz beeinflussenden Spulenparameter unterschiedlich ausgebildet. Die Spulenimpedanzen sind dabei auf bestimmte Impedanzen der Transpondereinheit und der Leseeinrichtung abgestimmt. Eine besondere Flexibilität hinsichtlich der Impedanzen der Sende- und Empfangsgeräte besteht nicht. Außerdem ist nichts offenbart zum Einsatzgebiet der Erfindung.

Die US 2007/0262868 A1 betrifft einen Lagercontainer, an dessen Außen- und Innenwand jeweils eine Antenne angeordnet ist, die miteinander verbunden sind. Zu speziellen Transpondern oder Lesegeräten sowie deren Befestigung an der Antenne ist nichts offenbart.

Die US 2007/0182650 A1 betrifft eine Datenübertragung z.B. an Reifen. Das System ist genau aufeinander abgestimmt, so dass eine Anpassung an verschiedene Geräte nicht erfolgen muss. Die Datenübertragung erfolgt darüber hinaus nur in einer Richtung von einer Sendeantenne zu einer Empfängerantenne.

In der WO 2008/119422 A1 sind RFID-tags offenbart, die von mehreren Seiten aus gelesen werden können. Eine Sende- und eine Empfangsantenne weist diese Einrichtung nicht auf.

### Zusammenfassung der Erfindung

Die vorgestellte Erfindung hat den Zweck, die freie Positionierung des RFID Feldes eines nahfeldbasierten RFID Sende- und Empfangsgerätes sowie die optimale Anpassung an weitere nahfeldbasierte RFID Sende- und Empfangsgeräte und an RFID-Transponder ohne zusätzliche Energieversorgung und ohne Modifikationen an den Geräten und RFID-Transpondern zu ermöglichen. Die sehr niedrigen Herstellkosten, der mögliche Einsatz zusammen mit standardisierten Geräten und die Wartungsfreiheit der Erfindung bilden eine sehr kosteneffiziente, auf den jeweiligen Anwendungszweck hervorragend abstimmbare Lösung.

Gegenstand der Erfindung ist die Verwendung eines passiven RFID Nahfeld Transformers (3), welcher das magnetische Nahfeld von einem RFID Sende- und Empfangsgerät (2) so transformiert, dass die Kommunikation zu weiteren RFID Sende- und Empfangsgeräten (4) und zu RFID-Transpondern (5) auf den Anwendungsfall abgestimmt ermöglicht wird. Dabei sind am nahfeldbasierten RFID Sende- und Empfangsgerät (2), an den weiteren RFID Sende- und Empfangsgeräten (4) und an den RFID-Transpondern (5) keine Modifikationen notwendig. Es braucht auch keine zusätzlichen mechanische oder elektrische Verbindungen und auch keine zusätzliche Energieversorgung. Der passive RFID Nahfeld Transformer (3) ist beispielsweise ein einfach nachrüstbarer Teil eines handelsüblichen NFC-Mobiltelefons, das dadurch beispielsweise nicht nur auf der Rückseite sondern auch auf der Vorderseite mit anderen RFID Sende- und Empfangsgeräten (4) und mit RFID-Transpondern (5) kommunizieren kann. Dies ermöglicht auch Anwendungen, wo beispielsweise dieses NFC Mobiltelefon direkt auf eine Platte montiert wird und ohne den passiven RFID Nahfeld Transformer (3) gar nicht mehr über NFC mit anderen RFID Sende- und Empfangsgeräten (4) und mit RFID-Transpondern (5) kommunizieren könnte, da die Kommunikationszone durch die Platte abgedeckt für den Benutzer unerreichbar wird.

Erfindungsgemäß wird dies dadurch erreicht, dass eine erste Antenne (10) das elektromagnetische Nahfeld eines RFID Sende- und Empfangsgerätes (2) über induktive Kopplung in elektrische Signale umwandelt, welche über eine oder mehrere, weitere Antennen (11) wieder in ein elektromagnetisches Nahfeld umgewandelt werden und über induktive Kopplung die Kommunikation mit weiteren RFID Sende- und Empfangsgeräten (4), respektive RFID-Transpondern (5) ermöglicht. Dabei werden die Antennen (10) und (11) entweder elektrisch, galvanisch direkt verbunden oder aber über eine elektrisch leitende, galvanische Verbindung (12) miteinander gekoppelt. Durch die Form und Beschaffenheit der Antennen (10) und (11) lassen sich die verschiedenen induktiven Kopplungen anpassen und auf die Anwendung optimieren.

Die Antennen (10) und (11) sowie die elektrische Verbindung (12) werden durch eine passive, elektronische Anpassschaltung (13), bestehend aus passiven, elektronischen Bauteilen wie Widerständen, Kondensatoren und Spulen, aufeinander abgestimmt und dadurch die Übertragungsverluste minimiert. Während dem die Antenne (10) direkt beim nahfeldbasierten RFID Sende- und Empfangsgerät (2) positioniert wird, kann die oder mehrere, weitere Antennen (11) der Anwendung entsprechend dort platziert werden, wo das Nahfeld für die Kommunikation mit weiteren RFID Sende- und Empfangsgeräten (4), respektive mit RFID-Transpondern (5) gewünscht wird.

Die Vorteile der Erfindung bestehen darin, dass durch den passiven RFID Nahfeld Transformer (3) das Feld eines nahfeldbasierten Standard-RFID Sende- und Empfangsgerätes (2) an für die Anwendung optimale Stelle transformiert werden kann. Es ist dabei auch möglich, das Feld gleichzeitig an mehrere Stellen zu transferieren. Der passive RFID Nahfeld Transformer (3) kann auch bidirektional verwendet werden. Bei all dem kommt der passive RFID Nahfeld Transformer (3) ohne eigene Energieversorgung aus. Für die Integration braucht es außerhalb des passiven RFID Nahfeld Transformers (3) keine Anpassungen, auch keine zusätzlichen mechanischen oder elektrischen Verbindungen, weder am nahfeldbasierten RFID Sende- und Empfangsgerät (2), noch an den weiteren RFID Sende- und Empfangsgeräten (4), noch an den RFID-Transpondern (5). Aufgrund dieser Eigenschaften ist der passive RFID Nahfeld Transformer (3) wartungsfrei und sehr universell einsetzbar.

Ein weiterer Vorteil besteht darin, dass der passive RFID Nahfeld Transformer (3) über zwei oder mehrere Antennen (10) und (11) verfügt, welche voneinander unabhängig für die jeweils optimale induktive Kopplung angepasst werden können. Dies verbessert erheblich die Nahfeld-Kommunikation und die mögliche Kommunikationsdistanz zwischen dem nahfeldbasierten RFID Sende- und Empfangsgerät (2) zu weiteren RFID Sende- und Empfangsgeräten (4) und zu RFID-Transpondern (5). Die Erfindung ermöglicht auch in Situationen eine induktive Kopplung, wo ohne den Einsatz der Erfindung eine direkte, induktive Kopplung zwischen dem nahfeldbasierten RFID Sende- und Empfangsgerät (2) und weiteren RFID Sende- und Empfangsgeräten (4), respektive RFID-Transpondern (5) gar nicht möglich wäre. Einerseits können über die Erfindung beispielsweise sehr unterschiedlich große Antennen gekoppelt werden, welche für eine direkte Kopplung ungeeignet wären. Andererseits können mit dem passiven RFID Nahfeld Transformer (3) auch Trennelemente überwunden werden, beispielsweise indem der passive RFID Nahfeld Transformer (3) in eine Gebäudewand integriert wird, kann über die Gebäudewand hinweg eine induktive Kopplung erstellt werden, wobei ein nahfeldbasiertes RFID Sende- und Empfangsgerät (2) auf einer Seite der Gebäudewand positioniert ist und weitere nahfeldbasierte RFID Sende- und Empfangsgeräte (4), respektive RFID-Transponder (5) auf der anderen Seite der Gebäudewand.
Durch die Erfindung können auch Standard-Mobiltelefone mit NFC an jede beliebige Anwendung und an beliebige weitere RFID Sende- und Empfangsgeräte (4) und an beliebige RFID-Transponder (5) angepasst werden. Neue, nahfeldbasierte RFID Anwendungen, selbst solche mit speziellen Anforderungen, können dank der Erfindung mit standardisierten und breit verfügbaren Geräten sehr einfach, schnell und kostengünstig realisiert werden.

### Kurze Beschreibung der Zeichnungen

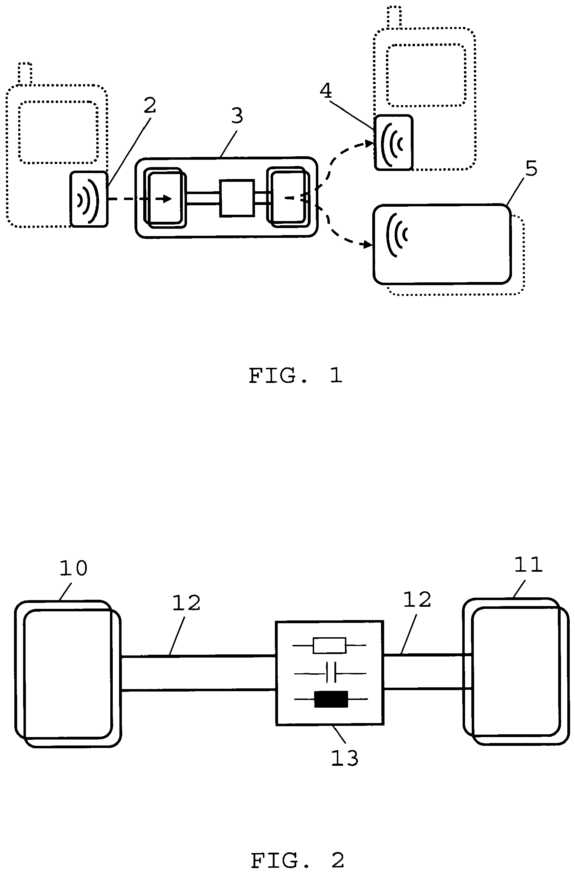

- FIG. 1: zeigt schemenhaft die Erfindung in ihrem Systemkontext:
(2) nahfeldbasiertes RFID Sende- und Empfangsgerät, beispielsweise in Form eines NFC-Mobiltelefons, welches über (3) mit (4) und (5) kommuniziert
(3) passiver RFID Nahfeld Transformer
(4) ein oder mehrere weitere RFID Sende- und Empfangsgeräte, beispielsweise in Form eines weiteren NFC-Mobiltelefons
(5) ein oder mehrere nahfeldbasierte RFID-Transponder
- FIG. 2: zeigt schemenhaft den Aufbau der Erfindung:
(10) ein oder mehrere Antennen zur induktiven Kopplung mit (2)
(11) ein oder mehrere Antennen zur induktiven Kopplung mit (4) und (5)
(12) elektrische, galvanische Verbindung zwischen (10), (11) und (13)
(13) dazwischen liegende, passive, elektronische Schaltung zur Anpassung von (10) mit (11) und (12).

### Detaillierte Beschreibung der Erfindung

Anhand einer einfachen NFC-Anwendung zum Erfassen der Kundendaten wird die Erfindung nachfolgend detailliert beschrieben. Andere Anwendungs- und Ausführungsformen sind durchaus möglich und am Ende der Beschreibung teilweise erwähnt.

In einem Geschäft mit mehreren Mitarbeitern wird ein Mobiltelefon mit NFC als nahfeldbasiertes RFID Sende- und Empfangsgerät (2) dazu verwendet, die auf der Kundenkarte als RFID-Transponder (5) gespeicherten Kundendaten auszulesen. Das NFC-Feld befindet sich standardmäßig auf der Rückseite des NFC-Mobiltelefons. Damit das Mobiltelefon am vorgesehenen Ort bleibt, wird es in eine Halterung montiert, welche jedoch die Rückseite des Mobiltelefons abdeckt. Zwischen dem Mobiltelefon und der Halterung wird die Antenne (10) des passiven RFID Nahfeld Transformers (3) montiert. Die Antenne (11) wird direkt neben das Mobiltelefon zur Kundenseite hin montiert. Dadurch wird das Nahfeld der Antenne (11) für Kunden gut zugänglich.

Auf eine Leiterplatte wird eine erste Antenne (10) aufgebracht, welche von der Größe und den Eigenschaften her auf eine optimale induktive Kopplung mit dem NFC-Teil des Mobiltelefons ausgelegt ist. Auf einer zweiten Leiterplatte wird eine zweite Antenne (11) aufgebracht, welche von der Größe und den Eigenschaften her auf eine optimale induktive Kopplung mit den Kundenkarten ausgelegt ist. Die beiden Leiterplatten mit den Antennen (10) und (11) werden über eine kurze Zweidrahtleitung elektrisch miteinander verbunden (12). Zum Abstimmen der beiden Antennen (10) und (11) mit der elektrisch leitenden Verbindung (12) wird auf einer der Leiterplatten eine passive elektronische Schaltung (13) integriert. Diese Anpassschaltung besteht aus passiven elektronischen Bauteilen, wie Widerständen, Kondensatoren und gegebenenfalls auch Induktivitäten. Das elektrische Nahfeld des NFC-Teils wird jetzt über die Antenne (10) in elektrische Signale umgewandelt, welche über die Antenne (11) wiederum zur Kundenkarte übertragen werden. Die Kommunikation von der Kundenkarte wird umgekehrt über die Antenne (11) auf die Antenne (10) wieder zurück zum NFC-Teil geführt.

Dank dem passiven RFID Nahfeld Transformer (3) wird das normale Mobiltelefon mit NFC zu einem sehr kostengünstigen und benutzerfreundlichen Terminal zum Erfassen der Kundendaten.
In einer anderen Form sind die beiden Antennen (10) und (11) über ein Koaxialkabel als elektrisch leitende Verbindung (12) gekoppelt, womit durchaus auch größere Distanzen im Meterbereich überbrückt werden können.
In wieder einer anderen Form sind die beiden Antennen (10) und (11) zwecks Optimierung der Kosten auf einer einzigen Leiterplatte zusammen mit der elektronischen Schaltung (13) aufgebracht und elektrisch direkt verbunden.
Diese Leiterplatte könnte beispielsweise auch eine flexible, biegbare Leiterplatte sein.
Als weitere Anwendungsform könnte ein Mobiltelefon mit NFC dank dem passiven RFID Nahfeld Transformer auch als Bezahlterminal verwendet werden.

Montiert in einem Bus könnte das Mobiltelefon mit NFC dank dem passiven RFID Nahfeld Transformer (3) auch als E-Ticketing-Terminal und -Validator verwendet werden.

Integriert in eine Mausunterlage oder in eine Tischplatte ermöglicht der passive RFID Nahfeld Transformer (3) beispielsweise die Kommunikation über NFC zwischen zwei NFC-Mobiltelefonen als nahfeldbasierte RFID Sende- und Empfangsgeräte (2) und (4), oder von einem NFC-Mobiltelefon als nahfeldbasiertes RFID Sende- und Empfangsgeräte (2) mit einem NFC-Transponder als RFID-Transponder (5), welche zu diesem Zweck lediglich auf die entsprechenden Zonen der Mausunterlage, respektive der Tischplatte gelegt werden. Dadurch erübrigt sich die sonst notwendige, direkte Kopplung.

Eingebaut in Trennwände, Sichtschutztafeln, Gebäudewände, Schalterverglasungen, Sicherheitsglas, Windschutzscheiben, Tresorwände, Türen oder ähnliches ermöglicht der passive RFID Nahfeld Transformer (3) auch die nahfeldbasierte RFID Kommunikation über diese Trennelemente hinweg.

Die Erfindung kann auch dazu verwendet werden, um die Probleme bei der induktiven Kopplung von unterschiedlichen Antennen zu überbrücken und um die Reichweite zu verbessern. Beispielsweise kann die kleine Antenne eines Mobiltelefons mit NFC über den passiven RFID Nahfeld Transformer (3) zur Kommunikation mit großen Antennen von Reisepässen gekoppelt werden.

In umgekehrter Art kann auch die typischerweise große Antenne von einem E-Ticketing-Validator über einen entsprechenden passiven RFID Nahfeld Transformer (3) mit den kleinen Antennen von Schlüsselanhängern oder NFC-Uhren gekoppelt werden.

Neben den hier direkt erwähnten Ausführungs- und Anwendungsformen gibt es natürlich auch noch viele weitere, mögliche Ausführungs- und Anwendungsformen der Erfindung.

## Patentansprüche

1. Elektronisches System als passiver RFID Nahfeld Transformer (3),
- wobei das elektronische System keine mechanische oder elektrische Verbindung, am, respektive zu einem nahfeldbasierten Sende- und Empfangsgerät (2) benötigt, und
- der passive RFID Nahfeld Transformer (3) ohne zusätzliche Energieversorgung auskommt,
- dass das elektronisches System für nahfeldbasierte RFID Sende- und Empfangsgeräte (2, 4), respektive RFID-Transponder (5), ausgebildet ist, zur Kommunikation von einem nahfeldbasierten RFID Sende- und Empfangsgerät (2) mit daneben angeordneten, weiteren nahfeldbasierten RFID Sende- und Empfangsgeräten (4), respektive RFID-Transpondern (5),
- dass das magnetische Nahfeld von einem NFC-Mobiltelefon oder portablen Computer mit NFC als nahfeldbasiertes RFID Sende- und Empfangsgerät (2) über einen passiven RFID Nahfeld Transformer (3) mit einem oder mehreren weiteren nahfeldbasierten RFID Sende- und Empfangsgeräten (4) oder einem oder mehreren nahfeldbasierten RFID-Transpondern (5) oder Kombinationen davon gekoppelt wird, **dadurch gekennzeichnet,**
- **dass** das elektronische System als Halterung oder Tischstation für nahfeldbasierte RFID Sende- und Empfangsgeräte (2, 4), respektive RFID-Transponder (5), ausgebildet ist,
- wobei in die Halterung, respektive Tischstation der passive RFID Nahfeld Transformer (3) mit einer ersten Antenne (10) zum Aufnehmen des Nahfeldes und einer zweiten Antenne (11) zum Abgeben des Nahfeldes, mit dazwischenliegender, passiver, elektronischer Anpassschaltung (13), integriert ist und
- **dass** die Teile des passiven RFID Nahfeld Transformers (3) untereinander elektrisch, galvanisch verbunden (12) sind,
- **dass** der passive RFID Nahfeld Transformer (3) in eine Schreibunterlage, Mausunterlage oder in eine Tisch- oder Schalterplatte oder eine andere Unterlage integriert ist und
- **dass** das nahfeldbasierte RFID Sende- und Empfangsgerät (2) auf die Kopplungszone der ersten Antenne (10) gelegt wird und weitere nahfeldbasierte RFID Sende- und Empfangsgeräte (4), respektive RFID-Transponder (5), auf die Kopplungszone der zweiten Antenne (11) gelegt werden können, respektive auf eine oder mehrere Kopplungszonen der Antennen (11) gelegt werden können und
- **dass** die Kopplung über den passiven RFID Nahfeld Transformer (3) bidirektional ausgelegt ist.

2. Elektronisches System nach Anspruch 1, **dadurch gekennzeichnet, dass** der passive RFID Nahfeld Transformer (3) über mehrere erste Antennen (10) zum Aufnehmen des Nahfeldes, über mehrere zweite Antennen (11) zum Abgeben des Nahfeldes, oder über mehrere von beiden Antennenspulen (10) und (11) verfügt.

3. Elektronisches System nach Anspruch 1 oder 2, **dadurch gekennzeichnet, dass** die passive, elektronische Anpassschaltung (13) aus passiven, elektronischen Bauteilen, wie Widerständen, Kondensatoren und Induktivitäten besteht.

4. Elektronisches System nach Anspruch 1, 2 oder 3, **dadurch gekennzeichnet, dass** der passive RFID Nahfeld Transformer (3) aus einer oder mehreren starren oder flexiblen Leiterplatten oder aus Kombinationen davon besteht.

5. Elektronisches System nach Anspruch 1, 2 oder 3, **dadurch gekennzeichnet, dass** die elektrische, galvanische Verbindung (12) direkt auf einer Leiterplatte, über eine flexible Leiterplatte, über Steckverbinder, über Klemmen, über Aderleitungen, über Koaxialkabel, über Drähte, über Litzen, über Flachkabel, über andere elektrische, galvanische Verbindungsformen oder über Kombinationen davon ausgeführt ist.

6. Elektronisches Systems nach Anspruch 1 bis 5, **dadurch gekennzeichnet, dass** die nahfeldbasierten RFID-Transponder (5) Chipkarten, Schlüsselanhänger, NFC-Uhren oder andere, nahfeldbasierte RFID-Transponder sind und die Kommunikation über ISO 14443, NFC, ISO 15693 oder andere, nahfeldbasierte Übertragungsarten erfolgt.

7. Elektronisches System nach Anspruch 1 bis 5 zum Ermöglichen der Kommunikation, respektive zum Vergrößern der möglichen Kommunikationsdistanz, zwischen unterschiedlichen RFID Nahfeld Antennen von einem nahfeldbasierten RFID Sende- und Empfangsgerät (2) und einem oder mehreren weiteren, nahfeldbasierten RFID Sende- und Empfangsgeräten (4), respektive einem oder mehreren nahfeldbasierten RFID-Transpondern (5), **dadurch gekennzeichnet, dass** die induktive Kopplung durch den entsprechend abgestimmten passiven RFID Nahfeld Transformer (3) insgesamt verbessert wird, indem die ersten Antennen (10) oder zweiten Antennen (11) oder die Anpassschaltung (13) oder Kombinationen davon entsprechend an den Anwendungsfall angepasst werden, das heißt an die unterschiedlichen RFID Nahfeld Antennen vom nahfeldbasierten RFID Sende- und Empfangsgerät (2) und einem oder mehreren weiteren nahfeldbasierten RFID Sende- und Empfangsgeräten (4), respektive einem oder mehreren nahfeldbasierten RFID-Transpondern (5) .

8. Elektronisches Systems nach Anspruch 1 bis 5, zur Kommunikation von einem nahfeldbasierten RFID Sende- und Empfangsgerät (2) in einer Halterung oder auf einer Tischstation mit weiteren nahfeldbasierten RFID Sende- und Empfangsgeräten (4), respektive RFID-Transpondern (5), **dadurch gekennzeichnet, dass** der passive RFID Nahfeld Transformer (3) in die Halterung, respektive Tischstation integriert ist, wobei die erste Antenne (10) sich in oder bei der Haltevorrichtung des nahfeldbasierten RFID Sende- und Empfangsgerätes (2) befindet und eine oder mehrere zweite Antennen (11) zur Kopplung mit nahfeldbasierten RFID Sende- und Empfangsgeräten (4), respektive zur Kopplung mit RFID-Transpondern (5), an einer oder mehreren anderen Stellen in derselben Halterung, respektive Tischstation, angebracht ist.

9. Elektronisches System nach Anspruch 1 bis 8 zum Bezahlen, zum Kontrollieren oder Entwerten von Berechtigungen, wie einer Zutrittsberechtigung, eines Fahrscheines, eines Gutscheines oder eines Rabatt-Bons, zum Übermitteln von Daten, oder Kombinationen davon, **dadurch gekennzeichnet, dass** ein nahfeldbasiertes RFID Sende- und Empfangsgerät (2) und ein oder mehrere weitere nahfeldbasierte RFID Sende- und Empfangsgeräte (4), respektive ein oder mehrere nahfeldbasierte RFID-Transponder (5) je über entsprechende Daten und Anwendungen verfügen oder an Geräte mit entsprechenden Daten und Anwendungen angeschlossen sind und die Kommunikation über den passiven RFID Nahfeld Transformer (3) erfolgt.

## Claims

1. An electronic system as a passive RFID near-field transformer (3),
- the electronic system requiring no mechanical or electrical connection on or to a near-field based transmitting and receiving device (2), and
- the passive RFID near-field transformer (3) not requiring any additional power supply,
- such that the electronic system is implemented for near-field based RFID transmitting and receiving devices (2, 4) or RFID transponders (5), for communicating of a near-field based RFID transmitting and receiving device (2) with additional near-field based RFID transmitting and receiving devices (4) or RFID transponders (5) disposed adjacent thereto,
- such that the magnetic near field is coupled by an NFC mobile telephone or portable computer having NFC as a near-field based RFID transmitting and receiving device (2) by means of a passive RFID near-field transformer (3) to one or more further near-field based RFID transmitting and receiving devices (4) or one or more near-field based RFID transponders (5) or combinations thereof, **characterized in that**
- the electronic system is implemented as a mounting element or table station for near-field based RFID transmitting and receiving devices (2, 4) or RFID transponders (5),
- wherein the passive RFID near-field transformer (3) having a first antenna (10) for receiving the near field and a second antenna (11) for emitting the near field, having an intermediate, passive, electronic adaptation circuit (13), is integrated in the mounting element or table station, and
- that the parts of the passive RFID near-field transformer (3) are electrically, galvanically connected (12) to each other,
- that the passive RFID near-field transformer (3) is integrated in a writing pad, mouse pad, or in a table or counter plate or another substrate, and
- that the near-field based RFID transmitting and receiving device (2) is placed on the coupling zone of the first antenna (10) and further near-field based RFID transmitting and receiving devices (4) or RFID transponders (5) can be placed on the coupling zone of the second antenna (11) or can be placed on one or more coupling zones of the antennas (11), and
- that the coupling by means of the passive RFID near-field transformer (3) is implemented bidirectionally.

2. The electronic system according to claim 1, **characterized in that** the passive RFID near-field transformer (3) comprises a plurality of first antennas (10) for receiving the near field, comprises a plurality of second antennas (11) for emitting the near field, or comprises a plurality of both antenna coils (10) and (11).

3. The electronic system according to claim 1 or 2, **characterized in that** the passive, electronic adaptation circuit (13) is made of passive, electronic components such as resistors, capacitors, and inductors.

4. The electronic system according to claim 1, 2, or 3, **characterized in that** the passive RFID near-field transformer (3) is made of one or more rigid or flexible circuit boards or a combination thereof.

5. The electronic system according to claim 1, 2, or 3, **characterized in that** the electrical, galvanic connection (12) is implemented directly on a circuit board, by means of a flexible circuit board, by means of plug connectors, by means of terminals, by means of conductors, by means of coaxial cable, by means of wires, by means of litz wires, by means of flat cable, by means of other electrical, galvanic connection types, or by means of combinations thereof.

6. The electronic system according to claim 1 through 5, **characterized in that** the near-field based RFID transponders (5) are chipcards, key fobs, NFC watches, or other near-field based RFID transponders, and the communication takes place via ISO 14443, NFC, ISO 15693, or other near-field based types of transmission.

7. The electronic system according to claim 1 through 5, for enabling communication or for increasing the potential communication distance between different RFID near-field antennas of a near-field based RFID transmitting and receiving device (2) and one or more additional near-field based RFID transmitting and receiving devices (4) or one or more near-field based RFID transponders (5), **characterized in that** the inductive coupling is improved overall by the correspondingly coordinated passive RFID near-field transformer (3) by adapting the first antennas (10) or second antennas (11) or the adaptation circuit (13) or combinations thereof to the application accordingly, that is, to the different RFID near-field antennas of the near-field based RFID transmitting and receiving device (2) and one or more additional near-field based RFID transmitting and receiving devices (4) or one or more near-field based RFID transponders (5).

8. The electronic system according to claim 1 through 5, for communicating of a near-field based RFID transmitting and receiving device (2) in a mounting element or on a table station with additional near-field based RFID transmitting and receiving devices (4) or RFID transponders (5), **characterized in that** the passive RFID near-field transformer (3) is integrated in the mounting element or table station, wherein the first antenna (10) is present in or at the mounting element of the near-field based RFID transmitting and receiving device (2) and one or more second antennas (11) are mounted at one or more other places in the same mounting element or table station for coupling to near-field based RFID transmitting and receiving devices (4) or for coupling to RFID transponders (5).

9. The electronic system according to claim 1 through 8 for paying, for checking or validating authorizations, such as access authorization, a ticket, a gift certificate, or a discount coupon, for transmitting data, or combinations thereof, **characterized in that** a near-field based RFID transmitting and receiving device (2) and one or more additional near-field based RFID transmitting and receiving devices (4) or one or more near-field based RFID transponders (5) each have corresponding data and applications or are connected to devices having corresponding data and applications and the communication takes place by means of the passive RFID near-field transformer (3).

## Revendications

1. Système électronique en tant que transformateur RFID (3) passif de champ proche,
- dans lequel le système électronique n'a pas besoin d'une liaison mécanique ou électrique à resp. avec un appareil d'émission et de réception (2) en champ proche, et
- le transformateur RFID (3) passif de champ proche se passe d'alimentation électrique supplémentaire,
- sachant que le système électronique se présente sous une forme pour les appareils d'émission et de réception RFID (2, 4) en champ proche resp. les transpondeurs RFID (5) pour la communication d'un appareil d'émission et de réception RFID (2) en champ proche avec d'autres appareils d'émission et de réception RFID (4) en champ proche resp. des transpondeurs RFID (5) disposés près de lui,
- sachant que le champ proche magnétique est couplé depuis un téléphone mobile NFC ou un ordinateur portable avec NFC en tant qu'appareil d'émission et de réception RFID (2) en champ proche via un transpondeur RFID (3) passif en champ proche avec un ou plusieurs autres appareils d'émission et de réception RFID (4) en champ proche ou un ou plusieurs transpondeurs RFID (5) en champ proche ou des combinaisons de ces derniers, **caractérisé en ce que**,
- le système électronique se présente sous la forme d'un support ou d'une station de table pour les appareils d'émission et de réception RFID (2, 4) en champ proche resp. les transpondeurs RFID (5),
- sachant que le transpondeur RFID (3) passif en champ proche est intégré dans le support resp. la station de table avec une première antenne (10) pour capter le champ proche et une seconde antenne (11) pour délivrer le champ proche, avec un circuit d'adaptation (13) électronique passif interposé, et
- **en ce que** les composants du transformateur RFID (3) passif en champ proche sont reliés électriquement, par voie galvanique (12), les uns avec les autres,
- **en ce que** le transformateur RFID (3) passif en champ proche est intégré dans un sous-main, un tapis de souris ou dans une plaque de table ou de commutateurs ou dans un autre support, et
- **en ce que** l'appareil d'émission et de réception RFID (2) en champ proche est couplé dans la zone de couplage de la première antenne (10) et d'autres appareils d'émission et de réception RFID (4) resp. transpondeurs RFID (5) peuvent être couplés dans la zone de couplage de la seconde antenne (11) resp. dans une ou plusieurs zones de couplage des antennes (11) et
- **en ce que** le couplage est réalisé de manière bidirectionnelle via le transformateur RFID (3) passif en champ proche.

2. Système électronique selon la revendication 1, **caractérisé en ce que** le transformateur RFID (3) passif en champ proche comporte plusieurs premières antennes (10) pour capter le champ proche, plusieurs secondes antennes (11) pour délivrer le champ proche ou plusieurs des deux bobines d'antennes (10) et (11)

3. Système électronique selon la revendication 1 ou 2, **caractérisé en ce que** le circuit d'adaptation (13) électronique passif se compose de composants électroniques passifs tels que des résistances, des condensateurs et des inductances.

4. Système électronique selon la revendication 1, 2 ou 3, **caractérisé en ce que** le transformateur RFID (3) passif en champ proche se compose d'une ou de plusieurs plaquettes de circuit imprimé rigides ou souples ou d'une combinaison de ces dernières.

5. Système électronique selon la revendication 1, 2 ou 3, **caractérisé en ce que** la liaison (12) galvanique électrique est réalisée directement sur une plaquette de circuit imprimé via une plaquette de circuit imprimé souple, via des connecteurs enfichables, via des bornes, via des câbles à fil conducteur, via des câbles coaxiaux, via des fils métalliques, via des torons, via des câbles plats, via d'autres formes de liaison galvanique électrique ou via des combinaisons de ces formes de liaison.

6. Système électronique selon les revendications 1 à 5, **caractérisé en ce que** les transpondeurs RFID (5) en champ proche sont des cartes à puce, des porte-clés, des montres NFC ou d'autres transpondeurs RFID en champ proche, et la communication s'effectue via ISO 14443, NFC, ISO 15693 ou d'autres modes de transmission en champ proche.

7. Système électronique selon les revendications 1 à 5 pour permettre la communication resp. allonger la distance de communication possible entre des antennes en champ proche RFID différentes d'un appareil d'émission et de réception RFID (2) en champ proche et un ou plusieurs autres appareils d'émission et de réception RFID (4) en champ proche resp. un ou plusieurs transpondeurs RFID (5) en champ proche, **caractérisé en ce que** le couplage inductif est globalement amélioré par le transformateur RFID (3) passif en champ proche adéquatement accordé en ce sens que les premières antennes (10) ou les secondes antennes (11) ou le circuit d'adaptation (13) ou des combinaisons de ces derniers sont adéquatement adaptés au cas d'utilisation, c'est-à-dire aux différentes antennes RFID en champ proche d'appareils d'émission et de réception RFID (2) en champ proche et d'un ou de plusieurs appareils d'émission et de réception RFID (4) en champ proche supplémentaires resp. d'un ou de plusieurs transpondeurs RFID (5) en champ proche.

8. Système électronique selon les revendications 1 à 5 pour la communication d'un appareil d'émission et de réception RFID (2) en champ proche dans un support ou sur une station de table avec d'autres appareils d'émission et de réception RFID (4) en champ proche resp. des transpondeurs RFID (5) en champ proche, **caractérisé en ce que** le transformateur RFID (3) passif en champ proche est intégré dans le support resp. dans la station de table, sachant que la première antenne (10) se trouve dans ou près du dispositif de support de l'appareil d'émission et de réception RFID (2) en champ proche et une ou plusieurs secondes antennes (11) pour le couplage avec des appareils d'émission et de réception RFID (4) en champ proche resp. pour le couplage avec des transpondeurs RFID (5) sont disposées à un ou plusieurs autres emplacements dans le même support resp. la même station de table.

9. Système électronique selon les revendications 1 à 8 pour payer, contrôler ou composter des autorisations, telles que des autorisations d'accès, d'un titre de transport, d'un bon ou d'un bon de réduction, pour transmettre des données, ou pour des combinaisons de ces applications, caractérisé en ce qu'un appareil d'émission et de réception RFID (2) en champ proche et un ou plusieurs autres appareils d'émission et de réception RFID (4) en champ proche resp. un ou plusieurs transpondeurs RFID (5) en champ proche disposent respectivement de données et d'applications afférentes ou sont raccordés à des appareils avec des données et des applications afférentes et la communication s'effectue via le transformateur RFID (3) passif en champ proche.
